# EUROPEAN PATENT APPLICATION

(11) **EP 3 637 332 A1**
(43) Date of publication of application: **15.04.2020**
(21) Application number: 18810085.3
(22) Date of filing: 29.05.2018
(51) Int. Cl.: G06Q 10/02

(54) **RESERVATION RECEPTION DEVICE AND RESERVATION RECEPTION PROGRAM**

(30) Priority: 30.05.2017 JP 2017106642
(71) Applicant: Recruit Co., Ltd., Tokyo 104-0061 (JP)
(72) Inventor: YUMIBA, Hirotsugu, Tokyo 100-6640 (JP)
(74) Representative: EIP
(86) International application number: PCT/JP2018/020451
(87) International publication number: WO 2018/221483

(57) **Abstract**

A reservation accepting apparatus which is capable of accepting a reservation while increasing flexibility of a reservation applicant and effectively allocating resources is provided. A menu item, one or more resources, an allocated time slot to be allocated for provision of service specified by the menu item, and an upper limit number of reservations which can be applied for in the allocated time slot are registered in accordance with an operation instruction by the reservation receptionist, an application for a reservation which designates a menu item and an allocated time slot is accepted up to the upper limit number, and, when the reservation applicant visits a store, a time slot in which other reservations are not allocated and in which other reservations are not allocated for resources corresponding to the menu item designated upon application for the reservation among the allocated time slot designated upon application for the reservation is set as a reservation period for the reservation applicant.

## Description

### Cross-reference to Related Application

The present application is based on Japanese Patent Application No. 2017-106642 filed on May 30, 2017, the description of which is incorporated herein by reference.

### Technical Field

The present invention relates to a reservation accepting apparatus and a reservation accepting program.

### Background Art

The following Patent Literature 1 discloses a reservation system. In this reservation system, a reservation receptionist such as a business operator who accepts a reservation, registers in advance, a menu item which specifies content of service, resources which become resources when service is provided, a time slot in which service is to be provided, and the like, and a reservation applicant who is to apply for a reservation applies for a reservation while designating a reservation frame determined by the menu item, the resources and the time slot.

### Citation List

### Patent Literature

Patent Literature 1: Japanese Patent Laid-Open No. 2016-218908

### Summary of Invention

However, in the reservation system of Patent Literature 1, content of a reservation frame for which a reservation is to be applied for is content designated upon application for the reservation and is fixed, which can be a factor of lowering flexibility of a reservation applicant, and which can be a factor of causing a bias to a status of resource reservation.

Therefore, an object of the present invention is to provide a reservation accepting apparatus and a reservation accepting program which are capable of accepting a reservation while increasing flexibility of a reservation applicant and effectively allocating resources.

A reservation accepting apparatus according to one aspect of the present invention includes registering means for registering a menu item which specifies content of service, one or more resources which become resources when the service specified by the menu item is provided, an allocated time slot to be allocated for provision of the service specified by the menu item, and an upper limit number of reservations which can be applied for in the allocated time slot, in accordance with an operation instruction by a reservation receptionist who accepts a reservation, accepting means for accepting application for a reservation which designates the menu item and the allocated time slot up to the upper limit number, and setting means for, when a reservation applicant who has applied for the reservation visits a store, setting a time slot in which other reservations are not allocated and in which other reservations are not allocated for the resources corresponding to the menu item designated upon application for the reservation among the allocated time slot designated upon application for the reservation, as a reservation period for the reservation applicant.

In the above-described aspect, the registering means may further register a period to be allocated to one reservation frame, and the setting means may set the reservation period for the reservation applicant in one reservation frame among a plurality of reservation frames which can be set to the allocated time slot.

In the above-described aspect, the allocated time slot may be a period obtained by multiplying a period allocated to one reservation frame by the upper limit number.

A reservation accepting program according to another aspect of the present invention causes a computer to function as registering means for registering a menu item which specifies content of service, one or more resources which become resources when the service specified by the menu item is provided, an allocated time slot to be allocated for provision of the service specified by the menu item, and an upper limit number of reservations which can be applied for in the allocated time slot, in accordance with an operation instruction by a reservation receptionist who accepts a reservation, accepting means for accepting application for a reservation which designates the menu item and the allocated time slot up to the upper limit number, and setting means for, when a reservation applicant who has applied for the reservation visits a store, setting a time slot in which other reservations are not allocated and in which other reservations are not allocated for the resources corresponding to the menu item designated upon application for the reservation among the allocated time slot designated upon application for the reservation, as a reservation period for the reservation applicant.

### Advantageous Effects of Invention

According to the present invention, it is possible to provide a reservation accepting apparatus and a reservation accepting program which are capable of accepting a reservation while increasing flexibility of a reservation applicant and effectively allocating resources.

### Brief Description of Drawings

[Figure 1] Figure 1 is a view illustrating a configuration of a reservation accepting system including a reservation accepting server in an embodiment.
[Figure 2] Figure 2 is a view illustrating a configuration of the reservation accepting server illustrated in Figure 1.
[Figure 3] Figure 3 is a view illustrating reservation frames using a normal reservation scheme and a reservation frame for which a time slot is designated using a time slot reservation scheme, displayed on a reservation schedule screen.
[Figure 4] Figure 4 is a close-up view of the reservation frame for which a time slot is designated displayed on the reservation schedule screen illustrated in Figure 3.
[Figure 5] Figure 5 is a view illustrating relationship among a menu item, resource groups and resources.

### Description of Embodiment

An embodiment of the present invention will be described in detail below with reference to the drawings. Note that the same reference numerals will be assigned to the same components, and overlapped description will be omitted.

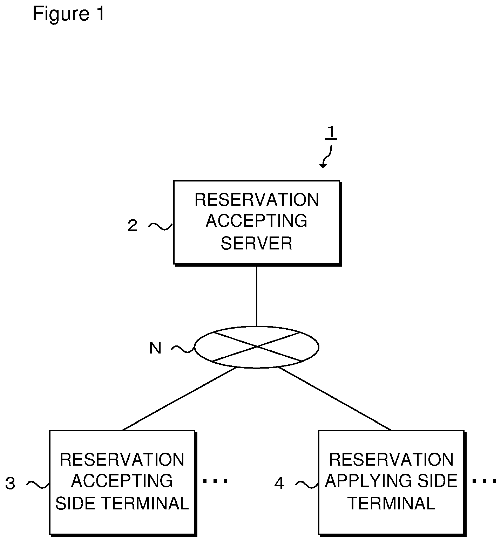

Figure 1 is a schematic configuration diagram of a reservation accepting system including a reservation accepting server (reservation accepting apparatus) according to an embodiment of the present invention. As illustrated in Figure 1, a reservation accepting system 1 in the present embodiment includes a reservation accepting server 2, one or more reservation accepting side terminals 3, and one or more reservation applying side terminals 4. The reservation accepting side terminal 3 and the reservation applying side terminal 4 are respectively configured so as to be able to perform communication with the reservation accepting server 2 via a network N.

The reservation accepting side terminal 3 is a terminal apparatus used by a business operator which provides service as a reservation receptionist who accepts a reservation of an event which will be described later. The business operator which can be the reservation receptionist includes a business operator in every kind of business type and business category.

The reservation applying side terminal 4 is a terminal apparatus used by a user who accepts provision of service as a reservation applicant who applies for a reservation of an event.

The event may be any event which can be a target of a reservation. The event can be, for example, specified by reservation event information generated through setting of a reservation frame which will be described later. The reservation event information includes, for example, a customer ID of a reservation receptionist, event identification information for specifying an event, a genre of an event, a location where an event is to be provided, time at which an event is provided, a fee for an event, supplemental explanation regarding an event, or the like.

The genre of the event can be set, for example, for each business type, for each business category, or for each type of targets to which the event is to be provided, and specifically corresponds to a dental clinic, a hospital, a fitness, a school, a cosmetic salon, an eating place, cuisine to be provided at the eating place (for example, Tempura Soba or Zaru Soba to be provided at Soba restaurant), or the like. A plurality of classes can be arbitrarily provided to each genre. For example, in a case where the genre is an eating place, a restaurant, a cafe, a pub, or the like, can be provided as a subordinate class of the eating place, and Japanese food, Chinese food, Western food, or the like, can be provided as a subordinate class of the restaurant, and further, Sushi restaurant, Soba restaurant, Tempura restaurant, or the like, can be provided as a subordinate class of the Japanese food.

In the present embodiment, while description will be provided assuming that the reservation accepting side terminal 3 and the reservation applying side terminal 4 are PCs (personal computers), the reservation accepting side terminal 3 and the reservation applying side terminal 4 are not limited to this. As the reservation accepting side terminal 3 and the reservation applying side terminal 4, for example, it is also possible to use a notebook PC, a tablet terminal, a smartphone, a mobile phone, a personal digital assistance (PDA), and other terminal apparatuses as appropriate.

The reservation accepting server 2 is configured with, for example, a computer having high arithmetic processing capacity and realizes a server function by a predetermined server program operating at the computer. Here, the computer constituting the reservation accepting server 2 does not necessarily have to be one computer, and may be configured with a plurality of computers dispersed on the network N.

The network N includes a communication network on which information can be transmitted and received to and from each other among the reservation accepting server 2, the reservation accepting side terminal 3 and the reservation applying side terminal 4. The network N may be, for example, one of the Internet, a LAN, a leased line, a telephone network, an intranet, a mobile communication network, Bluetooth (registered trademark), WiFi (Wireless Fidelity), other communication lines, combinations thereof, or the like, and may be a wired network or a wireless network.

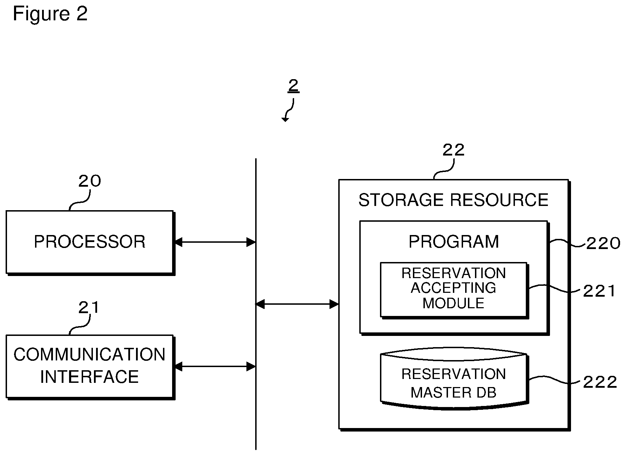

As illustrated in Figure 2, the reservation accepting server 2 includes, for example, a processor 20, a communication interface 21 and a storage resource 22.

The processor 20 is configured with an arithmetic-logic unit which performs processing of arithmetic operation, logic operation, bit operation, or the like, and various kinds of registers, and realizes various kinds of functions which will be described later by executing a computer program 220 stored in the storage resource 22. Various kinds of registers are, for example, a program counter, a data register, a command register, a general-purpose register, or the like.

The communication interface 21 is a hardware module which is connected to the network N and which performs communication with other terminals on the network N. The communication interface 21 is, for example, a modulating and demodulating apparatus such as an ISDN modem, an ADSL modem, a cable modem, an optical modem and a software modem.

The storage resource 22 is, for example, a logical device provided by a storage area of a physical device. The physical device is, for example, a computer readable recording medium such as a disk drive and a semiconductor memory. The storage resource 22 may be constructed by a plurality of physical devices being mapped to one logical device or by one physical device being mapped to a plurality of logical devices. The computer program 220 is stored in the storage resource 22.

In the storage resource 22, as well as the computer program 220, an operating system program, a driver program, various kinds of data, or the like, which are used for processing of the reservation accepting server 2 are stored. Examples of the driver program can include, for example, a communication interface driver program, or the like, for controlling the communication interface 21. Examples of various kinds of data can include, for example, reservation information, or the like, stored in a reservation master DB (database) 222.

The reservation master DB 222 is a database in which the reservation information is stored, and has, for example, a store ID item, a reservation ID item, a menu No item, a resource No item, a customer ID item, a reservation basic information item group, or the like, as data items.

The store ID item stores identification information for specifying a store which accepts a reservation. The reservation ID item stores identification information for specifying a reservation. The menu No item stores identification information for specifying a menu item indicating content of service to be reserved. The resource No item stores identification information for specifying resources indicating resources when the reserved service is provided. The customer ID item stores identification information for specifying a customer (reservation applicant) who applies for a reservation.

The reservation basic information item group is a data item group which stores basic information regarding a reservation. The reservation basic information item group includes, for example, data items such as a name item, a Furigana item, an e-mail address item, a telephone number item, a provision location item, a provision time item, a fee item and a number-of-persons item.

Note that the above-described configuration of the database and combination of the data items stored in the database are merely examples, and the configuration of the database and the combination of the data items can be changed as appropriate in accordance with a system to be operated.

The computer program 220 illustrated in Figure 2 is a program for performing predetermined processing, and includes a plurality of software modules to be executed by being invoked as appropriate during operation of a main program of the reservation accepting server 2. This software module is a sub-program modularized for executing respective kinds of specific processing, and is, for example, created using procedure, sub-routines, methods, functions, data structures, or the like.

The computer program 220 has a reservation accepting module 221 as an example. Functions to be realized through execution of the reservation accepting module 221 will be described later.

Before the above-described functions are described, a reservation accepting scheme in the present embodiment will be described. In the present embodiment, a (1) normal reservation scheme and a (2) time slot reservation scheme are provided as the reservation accepting scheme as an example, and a reservation receptionist can accept a reservation while selecting one of the accepting schemes as appropriate. The (1) normal reservation scheme is a reservation accepting scheme which has been conventionally employed, and the (2) time slot reservation scheme is a reservation accepting scheme which is newly added and employed in the present disclosure.

Functions to be realized through execution of the reservation accepting module 221 illustrated in Figure 2 will be sequentially described below for each accepting scheme.

### (1) Normal reservation scheme:

The normal reservation scheme includes a (a) preset type and a (b) free accepting type as a reservation accepting type as an example.

The (a) preset type is a scheme in which a reservation is accepted from a reservation applicant by utilizing a reservation frame set in advance by a reservation receptionist. The (b) free accepting type is a scheme in which a reservation is accepted from a reservation applicant by the reservation applicant setting a desired reservation frame within a service provision period set by a reservation receptionist.

The reservation accepting module 221 illustrated in Figure 2 causes the reservation receptionist to register a menu item, resource groups and resources as processing of preparation work to be performed before a reservation frame is set in the (a) preset type and the (b) free accepting type. Content of the menu item, the resource groups and the resources can be arbitrarily registered (including addition and deletion) by the reservation receptionist. In this processing of preparation work, it is possible to cause information (which will be described later) respectively relating to the menu item, the resource groups and the resources to be registered.

The menu item is an item for specifying content of service to be provided by the reservation receptionist, and the resource is an item for specifying resources (such as, for example, persons, facility and equipment) when service is provided. The resource group is an item to which the resource belongs. The menu item, the resource group and the resource can be used as elements when the reservation frame is specified.

Here, the menu item, the resource group and the resource will be described for each business type and business category of the reservation receptionist using specific examples.

In a case where the business type and the business category of the reservation receptionist are a dental clinic, for example, an "orthodontic treatment", a "routine checkup", an "implant treatment", "whitening", or the like, can be set as the menu items, and, for example, a "treatment table", a "dentist in charge", a "treatment instrument", or the like, can be set as the resource groups. For example, a treatment table number can be set as a resource of the "treatment table", for example, name of a dentist can be set as a resource of the "dentist in charge", and, for example, name of a treatment instrument can be set as a resource of the "treatment instrument".

In a case where the business type and the business category of the reservation receptionist are an automobile repair shop, for example, "tire change", "plate painting", "attachment of a car navigation system", "car inspection", or the like, can be set as the menu items, and, for example, a "pit", a "worker", a "tool", or the like, can be set as the resource groups. For example, a pit number can be set as a resource of the "pit", for example, name of a worker can be set as a resource of the "worker", and, for example, name of a tool can be set as a resource of the "tool".

In a case where the business type and the business category of the reservation receptionist are a fitness studio, for example, "hot yoga", "Pilates", or the like, can be set as the menu items, and, for example, a "studio", an "instructor", an "option", or the like, can be set as the resource groups. For example, a studio number can be set as a resource of the "studio", for example, name of an instructor can be set as a resource of the "instructor", and, for example, "yoga mat", "towel", or the like, can be set as resources of the "option".

Note that the resource group does not necessarily have to be set. The resource group may be set as appropriate in a case where it is necessary to manage the resources while the resources are classified into a plurality of groups.

The reservation accepting module 221 illustrated in Figure 2 causes a reservation schedule screen corresponding to the reservation accepting type selected by the reservation receptionist to be displayed at the reservation accepting side terminal 3 and the reservation applying side terminal 4. Content of this reservation schedule screen is set using the menu item, the resource groups, the resources registered by the reservation receptionist, and information relating to these. For example, the content of the reservation schedule screen can be set as follows.

In a case where the reservation accepting type is the (a) preset type, the reservation receptionist sets a reservation frame on the reservation schedule screen by setting the menu item, and a time slot in which service corresponding to the menu item is to be provided. In a case where resources to be associated with the menu item are registered as information relating to the set menu item, the resources are displayed within the set reservation frame. In a case where date and time for which a reservation can be accepted are registered as the information relating to the resources, only resources which can be provided in the set time slot are displayed. Furthermore, in a case where the number of reservations which can be accepted at the same time is registered as the information relating to the resources, a reservation status is displayed within the set reservation frame.

In a case where the reservation accepting type is the (b) free accepting type, the reservation receptionist sets a service provision period on the reservation schedule screen. The reservation applicant sets a desired reservation frame within the service provision period set by the reservation receptionist.

The reservation receptionist accepts a reservation from the reservation applicant by providing a URL (uniform resource locator) of a reservation accepting page which can be accessed to the reservation applicant on the reservation schedule screen. Information regarding a reservation input by the reservation applicant operating the reservation applying side terminal 4 is stored in the storage resource 22 of the reservation accepting server 2 as reservation information and reflected in the reservation schedule screen. The reservation applicant can make a reservation, for example, by inputting the reservation information as follows.

In a case where the reservation accepting type is the (a) preset type, the reservation applicant makes a reservation by selecting a reservation frame in which there is vacancy in capacity among reservation frames displayed on the reservation schedule screen and inputting information necessary for the reservation. The information necessary for the reservation corresponds to, for example, name, a user ID, or the like, of the reservation applicant.

In a case where the reservation accepting type is the (b) free accepting type, the reservation applicant sets a reservation frame by selecting a menu item and resources to be reserved, causing a reservation schedule screen corresponding to the menu item and the resources to be displayed and selecting a time slot in which there is vacancy for a reservation among the service provision period, and makes a reservation by inputting information necessary for the reservation.

### (2) Time slot reservation scheme

The time slot reservation scheme is a scheme in which a reservation is accepted from the reservation applicant by utilizing a reservation frame for which a time slot is designated, and which is set by the reservation receptionist. The reservation frame for which a time slot is designated is a reservation frame which is set by designating a menu item and an allocated time slot to be allocated for provision of service specified by the menu item.

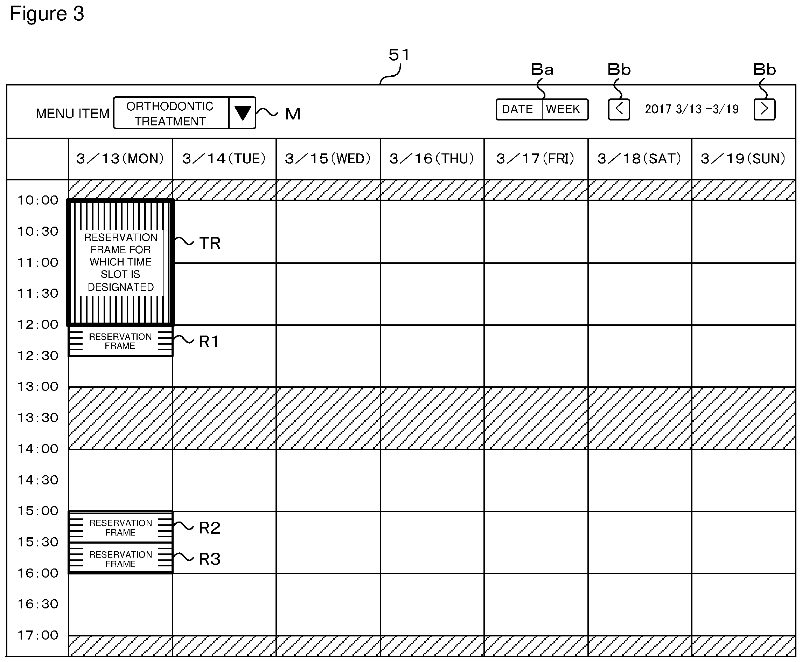

A difference between the reservation frame set by the (1) normal reservation scheme and the reservation frame for which a time slot is designated, set by the (2) time slot reservation scheme will be described with reference to the reservation schedule screen 51 illustrated in Figure 3. Reservation frames R1, R2 and R3 illustrated in Figure 3 are reservation frames set by the (1) normal reservation scheme, and a reservation frame TR is a reservation frame for which a time slot is designated, set by the (2) time slot reservation scheme.

While, in the reservation frames R1, R2 and R3, the menu item (for example, orthodontist), resources (for example, a treatment table, a dentist in charge, and a treatment tool), and a reservation target period (for example, 30 minutes from 12:00 to 12:30) are set and fixed, in the reservation frame TR for which a time slot is designated, the menu item (for example, orthodontist) and an allocated time slot (for example, two hours from 10:00 to 12:00) are set, and resources (for example, a treatment table, a dentist in charge and a treatment tool) for the reservation in the allocated time slot are not set.

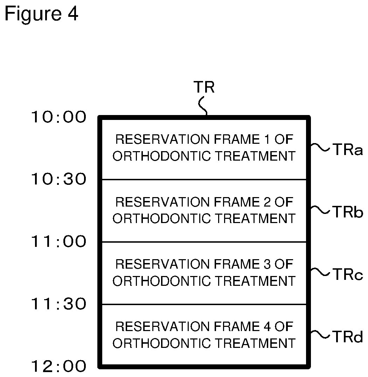

In the reservation frame TR for which a time slot is designated, a plurality of reservation frames which can be set in the allocated time slot are temporarily set. The plurality of reservation frames which can be set in the allocated time slot can be temporarily set, for example, by the reservation receptionist setting an upper limit number of reservation applicants who can apply for reservations in the allocated time slot and a period allocated to one reservation frame. This will be specifically described with reference to Figure 4.

The reservation frame TR illustrated in Figure 4 is a close-up view of the reservation frame TR displayed on the reservation schedule screen 51 in Figure 3. As illustrated in Figure 4, in the reservation frame TR for which a time slot is designated, four reservation frames TRa, TRb, TRc and TRd are temporarily set. This illustrates an example of a case where four is set as an upper limit number of reservation applicants who can apply for a reservation in the allocated time slot (from 10:00 to 12:00) of the reservation frame TR, and 30 minutes are set as a period allocated to one reservation frame. That is, the allocated time slot in this example is set as 120 minutes (two hours) which is a period obtained by multiplying 30 minutes which is a period allocated to one reservation frame by four which is an upper limit number of reservation applicants.

Here, on the reservation schedule screen 51 illustrated in Figure 3, a pull-down menu M for selecting a menu item, a switch button Ba for switching display between display of reservation schedule on a daily basis and display of reservation schedule on a weekly basis, and a selection button Bb for selecting a displayed date or week of the reservation schedule, are provided. Furthermore, on the reservation schedule screen 51, 10:00 to 13:00 and 14:00 to 17:00 are set as periods during which service can be provided, and the reservation frames can be set within ranges of these periods during which service can be provided.

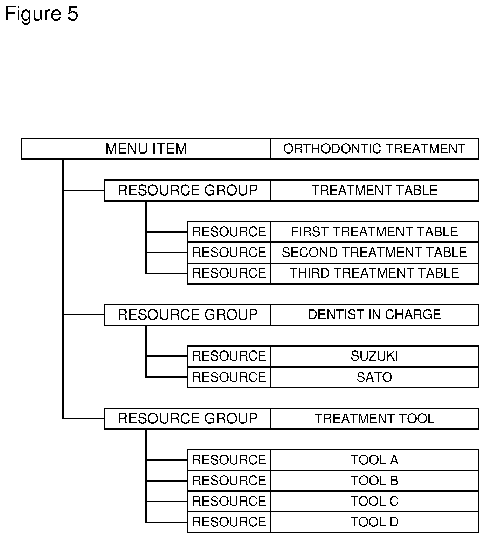

The reservation accepting module 221 illustrated in Figure 2 causes the reservation receptionist to register a menu item, resource groups and resources in a similar manner to the processing of the preparation work in the (1) normal reservation scheme described above, before a reservation frame is set in the (2) time slot reservation scheme. By this means, relationship among respective items illustrated in Figure 5 is constructed. The relationship illustrated in Figure 5 indicates that an orthodontic treatment which is a menu item is associated with each of a treatment table, a dentist in charge and a treatment tool which are resource groups, and is further associated with each of a first treatment table, a second treatment table, a third treatment table, Dr. Suzuki, Dr. Sato, a tool A, a tool B, a tool C and a tool D which are resources.

The reservation accepting module 221 causes the reservation receptionist to register the menu item, an allocated time slot (start time and end time) associated with the menu item, an upper limit number of reservation applicants for the allocated time slot, and a period allocated to one reservation frame. By this means, the reservation frame TR for which a time slot is designated is set on the reservation schedule screen 51 (see Figure 3). Note that a period allocated to one reservation frame is not necessarily required to be registered. For example, a period allocated to one reservation frame may be calculated by dividing the allocated time slot by the upper limit number of reservation applicants.

The reservation applicant can make a reservation by, for example, inputting reservation information as follows. The reservation applicant makes a reservation by selecting a reservation frame for which the number of reservations does not reach the upper limit number among reservation frames for which a time slot is designated, displayed on the reservation schedule screen and inputting information necessary for the reservation. The information necessary for the reservation corresponds to, for example, name, a user ID, or the like, of the reservation applicant.

The reservation accepting module 221 illustrated in Figure 2 accepts selection of the reservation frame for which a time slot is designated from the reservation applicant up to the upper limit number set for the reservation frame.

When a reservation applicant who has applied for the reservation using the time slot reservation scheme visits the dental clinic, the reservation accepting module 221 sets a time slot in which other reservations are not allocated and in which other reservations are not allocated for resources corresponding to the menu item set for the reservation frame for which the same time slot is designated among the allocated time slot set for the reservation frame for which a time slot is designated, selected by the reservation applicant upon application for the reservation, as a reservation period for the reservation applicant. This will be specifically described below.

A case will be described as an example where, among four reservation applicants who have made reservations by selecting the reservation frame TR for which a time slot is designated, set from 10:00 to 12:00 on March 13, Monday, illustrated in Figure 3, the reservation applicant X visits the dental clinic first at 9:55 on that date, and the reservation applicant Y visits the dental clinic second at 10:10 on that date.

First, when the reservation applicant X visits the dental clinic, a visiting button (button which is depressed when a reservation applicant visits the dental clinic) provided on a visiting reception screen displayed at the reservation accepting side terminal 3 is depressed by the reservation receptionist. By this means, the reservation accepting module 221 detects that the reservation applicant visits the dental clinic.

Note that the visiting button is not limited to be provided on the visiting reception screen of the reservation accepting side terminal 3. For example, the visiting button may be provided on a display screen of a check-in terminal provided in the front of the dental clinic, or the like. If the visiting button is depressed, the check-in terminal transmits a message making a notification that the visiting button is depressed to the reservation accepting server 2. The visiting button at the check-in terminal can be arbitrarily determined in accordance with specifications of a system so that the button can be depressed by one or both of the reservation receptionist and the reservation applicant.

Subsequently, the reservation accepting module 221 allocates the reservation frame TRa provided at a time slot from 10:00 to 10:30 which is the earliest time slot, among four reservation frames TRa, TRb, TRc and TRd provided at the reservation frame TR for which a time slot is designated, illustrated in Figure 4, to the reservation applicant X.

Subsequently, the reservation accepting module 221 selects a combination of a treatment table, a dentist in charge and a treatment tool which are not allocated to other reservations from 10:00 to 10:30 among combinations of treatment tables, dentists in charge and treatment tools associated with an orthodontic treatment on the basis of the relationship illustrated in Figure 5, and sets the combination for the reservation frame TRa of the reservation applicant X. By this means, reservation content of the reservation applicant X is fixed.

Subsequently, when the reservation applicant Y visits the dental clinic, the visiting button provided at the visiting reception screen at the reservation accepting side terminal 3 is depressed by the reservation receptionist. By this means, the reservation accepting module 221 detects that the reservation applicant visits the dental clinic.

Subsequently, the reservation accepting module 221 allocates the reservation frame TRb provided at a time slot from 10:30 to 11:00 which is the earliest time slot except the reservation frame TRa which has already been allocated to the reservation applicant X among the four reservation frames TRa, TRb, TRc and TRd provided at the reservation frame TR for which a time slot is designated, illustrated in Figure 4, to the reservation applicant Y.

Subsequently, the reservation accepting module 221 selects a combination of a treatment table, a dentist in charge and a treatment tool which are not allocated to other reservations from 10:30 to 11:00 among combinations of treatment tables, dentists in charge and treatment tools associated with an orthodontic treatment on the basis of the relationship illustrated in Figure 5 and sets the combination for the reservation frame TRb of the reservation applicant Y. By this means, reservation content of the reservation applicant X is fixed.

As described above, according to the reservation accepting system 1 in the embodiment, it is possible to register a menu item, one or more resources and an allocated time slot associated with the menu item, an upper limit number of reservations which can be applied for in the allocated time slot, and a period allocated to one reservation frame in accordance with an operation instruction by the reservation receptionist, and, when the reservation applicant who has made a reservation visits a store after application for the reservation which designates the menu item and the allocated time slot is accepted up to the upper limit number, it is possible to set a time slot in which other reservations are not allocated and in which other reservations are not allocated for resources corresponding to the menu item designated upon application for the reservation among the allocated time slot designated upon application for the reservation, as a reservation period for the reservation applicant.

By this means, the reservation applicant can receive provision of service by visiting a store during the allocated time slot in which a plurality of reservation frames are allocated, and a combination of resources which are not allocated to other reservations including reservations made using the normal reservation scheme can be allocated to the time slot of the reservation frame which is vacant when the reservation applicant visits the store

Therefore, according to the reservation accepting system 1 in the embodiment, it is possible to accept a reservation while increasing flexibility of the reservation applicant and effectively allocating resources.

### [Modified Example]

Note that the present invention is not limited to the above-described embodiment and can be implemented in other various forms within a scope not deviating from the gist of the present invention. Therefore, the above-described embodiment is merely an example in all respects, and is not intended to be interpreted in a limited manner. For example, order of the above-described respective processing steps can be arbitrarily changed or the steps can be executed in parallel within a scope not causing inconsistency in processing content.

Furthermore, while, in the above-described embodiment, description has been provided assuming that the reservation accepting side terminal 3 and the reservation applying side terminal 4 perform processing while accessing the reservation accepting server 2, the reservation accepting side terminal 3 and the reservation applying side terminal 4 do not necessarily have to perform processing while accessing the reservation accepting server 2. For example, the reservation accepting side terminal 3 and the reservation applying side terminal 4 may install reservation accepting application (reservation accepting app) and implement various kinds of functions of the reservation accepting system described above. In this case, the reservation accepting side terminal 3 and the reservation applying side terminal 4 only require to acquire the latest information from the reservation accepting server 2, execute processing, and transmit data processed within the reservation accepting side terminal 3 and the reservation applying side terminal 4 to the reservation accepting server 2.

Furthermore, a program in the embodiment can be installed or loaded to a computer by being downloaded through various kinds of recording media (computer readable recording media) such as an optical disk such as a CD-ROM, a magnetic disk, and a semiconductor memory, or via a communication network.

### Reference Signs List

- 1: reservation accepting system
- 2: reservation accepting server
- 3: reservation accepting side terminal
- 4: reservation applying side terminal
- 20: processor
- 21: communication interface
- 22: storage resource
- 51: reservation schedule screen
- 220: computer program
- 221: reservation accepting module
- 222: reservation master DB
- N: network

## Claims

1. A reservation accepting apparatus comprising:
registering means for registering a menu item which specifies content of service, one or more resources which become resources when the service specified by the menu item is provided, an allocated time slot to be allocated for provision of the service specified by the menu item, and an upper limit number of reservations which can be applied for in the allocated time slot, in accordance with an operation instruction by a reservation receptionist who accepts a reservation;
accepting means for accepting application for a reservation which designates the menu item and the allocated time slot up to the upper limit number; and
setting means for, when a reservation applicant who has applied for the reservation visits a store, setting a time slot in which other reservations are not allocated and in which other reservations are not allocated for the resources corresponding to the menu item designated upon application for the reservation among the allocated time slot designated upon application for the reservation, as a reservation period for the reservation applicant.

2. The reservation accepting apparatus according to claim 1,
wherein the registering means further registers a period to be allocated to one reservation frame, and
the setting means sets the reservation period for the reservation applicant in one reservation frame among a plurality of reservation frames which can be set to the allocated time slot.

3. The reservation accepting apparatus according to claim 2,
wherein the allocated time slot is a period obtained by multiplying a period allocated to one reservation frame by the upper limit number.

4. A reservation accepting program causing a computer to function as:
registering means for registering a menu item which specifies content of service, one or more resources which become resources when the service specified by the menu item is provided, an allocated time slot to be allocated for provision of the service specified by the menu item, and an upper limit number of reservations which can be applied for in the allocated time slot, in accordance with an operation instruction by a reservation receptionist who accepts a reservation;
accepting means for accepting application for a reservation which designates the menu item and the allocated time slot up to the upper limit number; and
setting means for, when a reservation applicant who has applied for the reservation visits a store, setting a time slot in which other reservations are not allocated and in which other reservations are not allocated for the resources corresponding to the menu item designated upon application for the reservation among the allocated time slot designated upon application for the reservation, as a reservation period for the reservation applicant.
